# EUROPÄISCHE PATENTSCHRIFT

(11) **EP 1 221 004 B1**
(45) Veröffentlichungstag und Bekanntmachung des Hinweises auf die Patenterteilung: **17.12.2003**
(21) Anmeldenummer: 00969482.9
(22) Anmeldetag: 11.10.2000
(51) Int. Cl.: F16H 37/04

(54) **SCHALTGETRIEBE**
GEARBOX
BOITE DE VITESSES

(30) Priorität: 15.10.1999 DE 19949856
(43) Veröffentlichungstag der Anmeldung: 10.07.2002
(73) Patentinhaber: ZF FRIEDRICHSHAFEN Aktiengesellschaft, 88038 Friedrichshafen (DE)
(72) Erfinder: EHRLINGER, Friedrich, J., 88048 Friedrichshafen (DE)
(86) Internationale Anmeldenummer: EP0009989
(87) Internationale Veröffentlichungsnummer: WO01029452

(56) Entgegenhaltungen:
- EP-A- 0 145 041
- DE-A- 3 431 485
- DE-A- 3 619 329
- US-A- 3 979 973
- US-A- 5 088 968

## Beschreibung

Die vorliegende Erfindung betrifft ein mehrgängiges Schaltgetriebe gemäß dem Oberbegriff des Anspruchs 1, und das aus EP 145 041 A bekannt ist.

Ein mehrgängiges Schaltgetriebe, bestehend aus einem Hauptgetriebe, einem Bereichsgruppengetriebe und einem Wendegetriebe, ist aus der DE A 36 19 329 der Anmelderin bekannt. Diese Getriebe überträgt Leistung von einer Antriebswelle auf eine Abtriebswelle in mehreren Gangstufen über Zahnräder, Synchronschaltkupplungen und schaltbare Reibkupplungen, wobei zwei Leistungszweige vorgesehen sind und die Leistung immer nur über einen Leistungszweig übertragen wird. In jedem Leistungszweig wirken eine Reibkupplung und mindestens eine Synchronschaltkupplung in Leistungsflußrichtung hintereinander. Die beiden Reibkupplungen sind auf der Antriebswelle angeordnet. Damit kann ein erster Fahrgeschwindigkeitsbereich mit großen Stufensprüngen und ein zweiter Fahrgeschwindigkeitsbereich mit kleinen Stufensprüngen geschaffen werden, wobei in einem begrenzten Haupt-Fahrgeschwindigkeitsbereich der Antriebsmotor mit hoher Drehzahl und hoher Leistung genutzt werden kann, ohne auf einen großen Gesamt-Fahrgeschwindigkeitsbereich verzichten zu müssen.

Bei diesem bekannten Getriebe sowie bei allen anderen heute verwendeten Schaltgetrieben sind Fahrkupplung und eigentliches Getriebe zwei getrennte Baugruppen. Die Fahrkupplung wird dabei mit dem Schwungrad und das Getriebe wird fest mit dem Motorblock verbunden. Eine feste, d. h. verschraubte Verbindung zwischen Kupplung und Getriebe ist nicht vorhanden. Werden heutzutage Kupplung und Getriebe, wie es oftmals von den Fahrzeugherstellern gewünscht wird, als Systemeinheit zusammen an ein Montageband geliefert, so werden also immer zwei voneinander getrennte Losteile zur Verfügung gestellt. Hierbei bedarf es einer sorgfältigen Abstimmung zwischen diesen beiden Losteilen, da nicht nur die Drehmomente, sondern auch die Schwungmasse der Kupplungsscheibe sowie maßgebliche Dimensionen und dgl. aufeinander abgestimmt sein müssen.

Zur Realisierung von Kostensenkungspotentialen zur Reduktion der Komplexität beim Fahrzeughersteller durch eine Systemlieferung und geringeren Montageaufwand ist es also wünschenswert, diese beiden Losteile miteinander zu verbinden, d. h. die Kupplung in das Getriebe zu integrieren.

Aufgabe der vorliegenden Erfindung ist es demzufolge, ein mehrgängiges Schaltgetriebe zu schaffen, insbesondere für Nutzfahrzeuge, in das die Anfahrkupplung integriert ist.

Ausgehend von einem mehrgängigen Schaltgetriebe der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Erfindungsgemäß wird also vorgeschlagen, dass bei einem mehrgängigen Schaltgetriebe mit zumindest teilweise automatisierter Getriebeschaltung oder mit manueller Getriebeschaltung, bei die Gangsynchronisation unter Motorführung erfolgt und dass zumindest zwei Getriebegruppen aufweist, die Vorschaltgruppe aus einem Planetentrieb besteht und dass das Abstützglied des Planetentriebs als Reibungsbremse ausgebildet ist, die in der langsamen Schaltstellung wirksam ist und dabei die Funktion einer Anfahrkupplung übernimmt.

Neben der bereits erwähnten Senkung der Herstellungskosten und Reduktion der Komplexität durch eine Systemlieferung und geringerem Montageaufwand wird mit dem erfindungsgemäßen Schaltgetriebe noch der Vorteil erzielt, dass eine verbesserte Zuverlässigkeit des Schaltgetriebes durch weniger Teile ermöglicht wird sowie eine verbesserte Abstimmung der beiden Einzelteile Kupplung und Getriebe aufeinander.

Gleichzeitig wird der Vorteil erzielt, dass gegenüber einem konventionellen Antriebsstrang die Kupplung mit der zugehörigen Druckplatte die Kupplungsscheibe mit dem Torsionsdämpfer das Ausrücklager und der Ausrückzylinder entfallen. Neben der erwähnten Kostensenkung führt dies auch zu einer erheblichen Gewichtsreduzierung.

Die herkömmliche Vorschaltgruppe in Form eines Zwei-Gang-Splitgetriebes wird durch einen Planetensatz mit Klauenschaltung ersetzt.

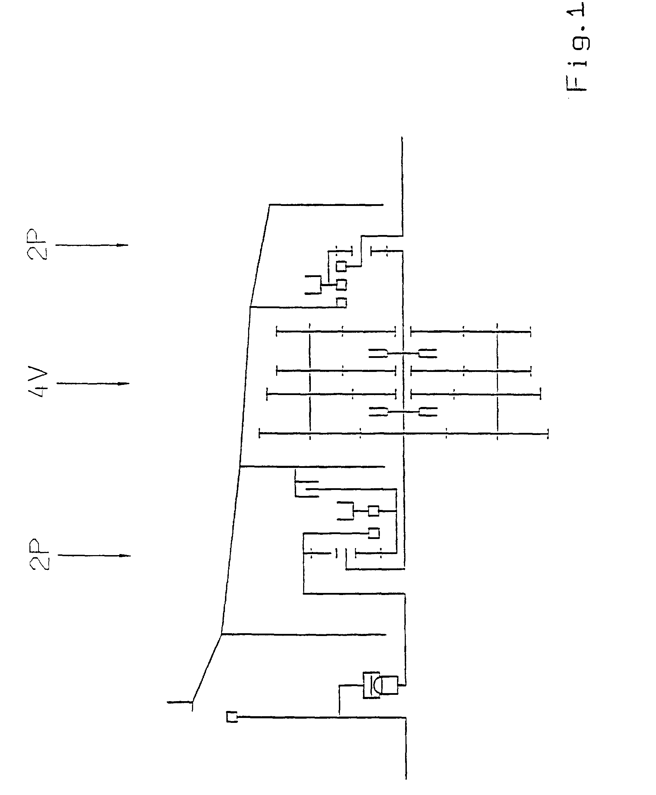

Im folgenden wird die Erfindung anhand eines Sechzehn-Gang-Getriebes im Zusammenhang mit der beigefügten Figur beschrieben, in der das Radschema dargestellt ist.

Die erfindungsgemäße Kupplungsintegration ist darin anhand eines Sechzehn-Gang-Getriebes mit dem Aufbau 2P x 4V x 2P beschrieben, wobei V für Vorgelegebauweise und P für Planetentrieb steht. Herkömmliche Sechzehn-Gang-Getriebe weisen üblicherweise den Aufbau 2V x 4V x 2P auf.

Durch die erfindungsgemäße Ausgestaltung der Vorschaltgruppe als Planetentrieb 2P wird, wie das beiliegende Radschema erkennen läßt, die Möglichkeit geschaffen, das Abstützglied bzw. das Sonnenrad des eingangsseitigen Planetentriebs 2P mit einer Reibkupplung abzubremsen und festzustellen. Diese Abstützglied des Planetentriebs ist also in der langsamen Schaltstellung als Reibungsbremse ausgebildet und nimmt die Funktion der Anfahrkupplung wahr. Eine Reibungsbremse ist erheblich kostengünstiger als eine herkömmliche Anfahrkupplung.

Der zweite Gang der ersten Getriebegruppe kann dann über die Motorsynchronisation geschaltet werden, wobei zum Anhalten wieder in die erste Stufe zurückzuschalten ist.

Es ist ferner vorgesehen, dass die Reibungsbremse, die als Anfahrkupplung dient, mit Luftdruck geschlossen werden kann, wobei sie im drucklosen Zustand geöffnet ist und bei Druckbeaufschlagung mit Druckluft schließt. Druckluft ist in jedem gängigen Nutzkraftwagen für andere Zwecke bereits an Bord vorhanden und verursacht keinen Zusatzaufwand.

Es ist ferner vorgesehen, dass der Planetentrieb 2P mittels einer formschlüssigen Kupplung überbrückt werden kann, sodass dadurch ein neuer Gang geschaltet werden kann.

Die Reibungsbremse, die die Funktion der Anfahrkupplung ausübt, kann entweder in einem Trockenraum des Getriebes untergebracht werden oder aber im ölgeschmierten Naßraum des Getriebes.

Es sei betont, dass im gesamten übrigen Antriebsstrang kein weiteres reibschlüssiges Trennglied mehr vorhanden ist.

## Patentansprüche

1. Mehrgängiges Schaltgetriebe, insbesondere für Nutzfahrzeuge, mit zumindest teilweise automatisierter Getriebeschaltung oder mit manueller Getriebeschaltung, bei der die Gangsynchronisation unter Motorführung erfolgt und das eine Vorschaltgruppe, ein Hauptgetriebe und eine Nachschaltgruppe aufweist, wobei die Vorschaltgruppe als Planetentrieb (2P) ausgestaltet ist, und das Abstützglied des Planetentriebs als Bremse ausgebildet ist, die in der langsamen Schaltstellung wirksam ist und **dadurch gekennzeichnet, dass** die Bremse als Reibungsbremse ausgebildet ist und die Funktion einer Anfahrkupplung übernimmt.

2. Mehrgängiges Schaltgetriebe nach Anspruch 1, **dadurch gekennzeichnet, dass** die Reibungsbremse an eine Druckfluidleitung derart angeschlossen ist, dass sie bei Druckbeaufschlagung geschlossen ist und im drucklosen Zustand geöffnet ist.

3. Mehrgängiges Schaltgetriebe nach Anspruch 2, **dadurch gekennzeichnet, dass** das Druckfluid Druckluft ist.

4. Mehrgängiges Schaltgetriebe nach einem der vorhergehenden Ansprüche, **dadurch gekennzeichnet, dass** die Reibungsbremse in einem Trockenraum angeordnet ist.

5. Mehrgängiges Schaltgetriebe nach einem der vorhergehenden Ansprüche, **dadurch gekennzeichnet, dass** die Reibungsbremse in einem Naßraum angeordnet ist.

6. Mehrgängiges Schaltgetriebe nach einem der vorhergehenden Ansprüche, **dadurch gekennzeichnet, dass** dem Planetentrieb (2P) eine diesen überbrückende formschlüssige Kupplung zugeordnet ist.

7. Mehrgängiges Schaltgetriebe nach einem der vorhergehenden Ansprüche, **dadurch gekennzeichnet, dass** die Reibungsbremse des eingangsseitigen Planetentriebs (2P) das einzige reibschlüssige Trennglied des Schaltgetriebes ist.

## Claims

1. Multispeed manual transmission, especially for commercial vehicles, with at least partially automated shifting operation or with manual shifting, with gear synchronization being effected by engine management, and which features a front-mounted range-change unit, a main transmission and a rear-mounted range-change unit, with the front-mounted range unit being designed as a planetary gear (2P) and the supporting element of the planetary gear being designed as a brake effective in the low-speed position and **characterized in that** the brake is designed as a friction brake and assumes the function of a starting clutch.

2. Multispeed manual transmission according to claim 1, **characterized in that** the friction brake is connected to a pressurized fluid line in such a way that it is closed during pressurization and open in the non-pressurized condition.

3. Multispeed manual transmission according to claim 2, **characterized in that** the pressurized fluid is pressurized air.

4. Multispeed manual transmission according to one of the preceding claims, **characterized in that** the friction brake is arranged in a dry space.

5. Multispeed manual transmission according to one of the preceding claims, **characterized in that** the friction brake is arranged in a wet space.

6. Multispeed manual transmission according to one of the preceding claims, **characterized in that** the planetary gear (2P) has a bridging positive clutch assigned to it.

7. Multispeed manual transmission according to one of the preceding claims, **characterized in that** the friction brake of the input-end planetary gear (2P) is the only frictionally engaged separating element of the manual transmission.

## Revendications

1. Transmission à plusieurs vitesses, en particulier pour véhicules utilitaires, comprenant une commutation de transmission au moins partiellement automatisée ou une commutation de transmission manuelle, dans laquelle la synchronisation des vitesses s'effectue avec intervention sur le moteur et qui comporte un groupe amont, une transmission principale, et un groupe aval, et dans laquelle le groupe amont est constitué par un train épicycloïdal (2P) et l'élément de réaction du train épicycloïdal est constitué par un frein qui est efficace dans la position de vitesse lente, et **caractérisée en ce que** le frein est constitué par un frein à friction et assure la fonction d'un embrayage de démarrage.

2. Transmission à plusieurs vitesses selon la revendication 1, **caractérisée en ce que** le frein à friction est raccordé à une conduite de fluide sous pression de manière à être serré lorsqu'il est chargé par une pression et à être desserré dans l'état sans pression.

3. Transmission à plusieurs vitesses selon la revendication 2, **caractérisée en ce que** le fluide sous pression est de l'air comprimé.

4. Transmission à plusieurs vitesses selon l'une des revendications précédentes, **caractérisée en ce que** le frein à friction est monté dans une chambre sèche.

5. Transmission à plusieurs vitesses selon l'une des revendications précédentes, **caractérisée en ce que** le frein à friction est monté dans une chambre humide.

6. Transmission à plusieurs vitesses selon l'une des revendications précédentes, **caractérisée en ce que**, au train épicycloïdal (2P), est associé un embrayage opérant par complémentarité de forme, qui court-circuite ce train.

7. Transmission à plusieurs vitesses selon l'une des revendications précédentes, **caractérisée en ce que** le frein à friction du train épicycloïdal côté entrée (2P) est l'unique élément de séparation de la transmission opérant par friction.
